# EUROPÄISCHE PATENTSCHRIFT

(11) **EP 0 897 992 B1**
(45) Veröffentlichungstag und Bekanntmachung des Hinweises auf die Patenterteilung: **10.09.2003**
(21) Anmeldenummer: 98890220.1
(22) Anmeldetag: 29.07.1998
(51) Int. Cl.: C14B 5/00

(54) **Verfahren zum Erstellen eines Schnittnestes**
Process for making cutting patterns
Procédé pour la fabrication de patrons à découper

(30) Priorität: 21.08.1997 AT 140297
(43) Veröffentlichungstag der Anmeldung: 24.02.1999
(73) Patentinhaber: GFM Beteiligungs- und Management GmbH & Co KG, 4403 Steyr (AT)
(72) Erfinder: Blaimschein, Gottfried, Dipl.-Ing., 4407 Steyr (AT); Dietachmayr, Harald, Ing., 4452 Ternberg (AT)
(74) Vertreter: Hübscher, Helmut, Dipl.-Ing.

(56) Entgegenhaltungen:
- DE-C- 19 522 717
- US-A- 4 982 437

## Beschreibung

Die Erfindung bezieht sich auf ein Verfahren zum Erstellen eines Schnittnestes für das Ausschneiden von Zuschnitten aus flachen, unregelmäßigen Werkstücken, insbesondere Lederhäuten, bei dem die Umrißform und die Fehlerstellen der auf eine Auflagefläche einer Aufnahmeeinrichtung aufgebreiteten Werkstücke samt einem Werkstückkennzeichen und werkstückeigenen Qualitätsmerkmalen mittels einer Digitalisiereinheit erfaßt und die entsprechenden Daten einem Rechner eingelesen werden, der auf Grund dieser Daten und der dem Rechner eingespeicherten Daten über Anzahl, Gestalt und Qualitätsanforderungen der Zuschnitte ein Schnittnest errechnet und abspeichert und dabei die erfaßten Werkstückkennzeichen der Werkstücke als Werkstückkennung für die Zuordnung der Schnittnester zu den jeweiligen Werkstücken heranzieht.

Beim industriellen Ausschneiden von Zuschnitten aus Lederstücken oder anderen unregelmäßigen Flachstücken geht es neben einer möglichst guten Materialnutzung auch um ein wirtschaftliches Nesten, wobei unter Nesten ein Zusammenstellen der verschiedenen Zuschnitte zu einem individuell auf das jeweilige Werkstück unter Berücksichtigung der Werkstückfehlerstellen, wie Löcher, Oberflächenstruktur und -farbe, Dehnrichtungen od. dgl., abgestimmten Schnittmuster verstanden wird. Aus der DE 195 22 717 C ist ein Verfahren bekannt, bei dem einzelne auszuschneidende Zuschnittsformen, auf einer großen Lederhaut unter guter Materialausnutzung platziert und diese Haut anschließend für den Ausschneidvorgang der einzelnen Zuschnittsteile aus der Lederhaut entlang einer entsprechenden Schnittlinie in zwei Teile getrennt werden, um handlichere Stücke für die Weiterbearbeitung zu erhalten und kleinere Schneidmaschinen einsetzen zu können. Mit diesem Verfahren werden die Vorteile des ganzflächigen Nestes und des teilflächigen Schneidens kombiniert. Damit können das Nesten und das Schneiden bzw. Ausstanzen an unterschiedlichen Stellen erfolgen. Zum Automatisieren dieses Nestens ist es gemäß der US-A 4 725 961 bekannt, das Werkstück über einen Rechner in seiner Umrißform zu digitalisieren und auf einem Bildschirm einer Layout-Einheit optisch anzuzeigen, wodurch am Bildschirm mittels eingespeicherter Zuschnittsformen ein interaktives Nesten ermöglicht wird. Damit fehlt aber jeder direkte Bezug des Nesters zur Haut, was mit der Schwierigkeit, Fehlerstellen u. dgl. rein optisch zu erkennen, zu unbefriedigenden Ergebnissen führt und wegen der Notwendigkeit, alle Zuschnittsformen interaktiv nesten zu müssen, auch einen langwierigen Nestvorgang mit sich bringt. Zur Kennzeichnung von Fehlerstellen auf Lederhäuten ist es bekannt (US 4982 437 A), die Fehlerstellen mit einem fluoriszierenden Marker beispielsweise durch Farbmarkierung, Aufkleber, Schnüre u. dgl. zu kennzeichnen, um die Fehlerstellen mit einer Kamera besser erkennen werden können. Entsprechend der DE-C 40 12 462, der US-A 4 982 437 und der US-A 5 089 971 wurde außerdem schon vorgeschlagen, Umrißform und Fehlerstellen eines Werkstückes optisch zu erfassen oder zu digitalisieren und die entsprechenden Daten zur rechnerischen Erstellung des Schnittmusters einem zusätzlich mit Daten über die Zuschnitte gespeisten Rechner einzugeben, wobei Fehlerstellen oder andere Qualitätsmerkmale zur besseren Erfassung auch händisch markierbar sind und ein erfaßtes Werkstückkennzeichen eines Werkstückes als Werkstückkennung für die Zuordnung des errechneten Schnittmusters zum jeweiligen Werkstück für den anschließenden Schneidvorgang dienen kann. Hier wird allerdings durch den Rechner nur für den auf Grund einer Markierung bzw. der optischen Auflösung vom Rechner erkennbar fehlerstellenfreien Werkstückbereich das Schnittnest erstellt, wodurch vor allem Werkstückbereiche, die nur schlecht erkennbare Fehlerstellen oder Qualitätsmängel aufweisen, unberücksichtigt bleiben und entweder durch eine umfassende Markierung in unwirtschaftlicher Weise aus dem Nestbereich herausfallen oder durch Einbeziehung in den Nestbereich zu Ausschußstücken der Zuschnitte führen können.

Nach einem weiteren bekannten rechnergestützten Nesten werden die Zuschnittsformen mittels eines an einen Rechner angeschlossenen Projektors auf das Werkstück projiziert, so daß bei aufrechtem Kontakt zum Werkstück durch händisches Steuern der Projektionen und das Einlesen der werkstückbezogenen Position der Projektionen in den Rechner interaktiv genestet werden kann. Der Kontakt zum Werkstück bietet dem Nester selbst die Möglichkeit der Fehlererkennung und eines diese berücksichtigenden Nestens, doch ist dieses Nesten wegen der Notwendigkeit eines interaktiven Nestens aller Teile wieder recht zeitaufwendig. Außerdem ergeben sich Beleuchtungsschwierigkeiten, da einerseits zur optischen Erfassung des Werkstückes eine ausreichend helle Beleuchtung erforderlich ist, zur Projektion der Zuschnitte aber eine Abdunkelung, was die Fehlererkennung des Nesters erschwert und dessen Augen wegen des häufigen Hell-Dunkelwechsels gesundheitsgefährdend belastet.

Der Erfindung liegt daher die Aufgabe zugrunde, ein Verfahren der eingangs geschilderten Art anzugeben, das ein rationelles Nesten der Zuschnitte unter Optimierung der Erkennung und Berücksichtigung auftretender Fehlerstellen der Werkstücke gewährleistet. Die Erfindung löst diese Aufgabe dadurch, daß vor dem rechnerseitigen automatischen Nesten interaktiv für ausgewählte Teilbereiche der Werkstücke genestet wird, indem über den Rechner zur Verfügung gestellte und optisch den Werkstücken bzw. einer Abbildung der Werkstücke überlagerbare Bilder der zu nestenden Zuschnittsformen durch gezielte Steuerungseingriffe des Nesters positioniert und innerhalb der Teilbereiche zu Teilnestern zusammengesetzt werden, worauf der Rechner für die verbleibenden Restbereiche der Werkstücke Restnester errechnet, die Restnester mit den zugehörigen Teilnestern kombiniert und diese Kombinationen aus Teil- und Restnestem jeweils als Schnittnest für die einzelnen Werkstücke abspeichert.

Beim Erstellen des Schnittnestes können demnach sowohl die menschlichen Fähigkeiten bei der Fehlererkennung als auch die rechnerische Perfektion einer automatischen Nestung genützt und ein bestens auf die jeweiligen Werkstücke angepaßtes Zusammenspiel dieser beiden Komponenten bewirkt werden. Stellt der Nester bei einem aufgebreiteten Werkstück Werkstückbereiche mit für die Digitalisiereinheit schlecht erfaßbaren Fehlerstellen oder Mängeln fest, kann er für diese ausgewählten Teilbereiche interaktiv nesten, wobei der Rechner geeignete Bilder der Zuschnittsformen zur Verfügung stellt und dem Werkstück oder einer Werkstückabbildung überlagert und der Nester unter Beibehaltung des direkten Werkstückbezuges diese Bilder durch gezielte Steuerungsmaßnahmen in die gewünschte Nestposition bringt und ein für den ausgewählten Teilbereich individuelles Teilnest zusammensetzt. Dieses Teilnest wird im Rechner festgehalten, der dann für den verbleibenden Restbereich der durch die Umrißform des Werkstückes, die Teilbereiche selbst und die vom Rechner erkannten und gegebenenfalls zusätzlich vom Nester markierten Fehlerstellen begrenzt ist, ein Restnest erstellt, so daß durch Kombination aus Teil- und Restnestem für jedes Werkstück ein einwandfreies Schnittnest entsteht, das zusammen mit den erforderlichen Werkstückkennzeichen als Werkstückkennung abgespeichert wird. Für einen nachfolgenden Schneidvorgang bildet dann dieses Schnittnest die Grundlage zur Erstellung eines Schneidprogrammes zum Ausschneiden der Zuschnitte aus dem über die Werkstückkennung identifizierbaren, zugehörigen Werkstück, wobei als Werkstückkennzeichen durchaus auch die Werkstückumrißform und/oder die Fehlerstellenmarkierungen dienen können. Das bewußte Zusammenspiel von interaktivem Nesten und automatisch rechnerischem Nesten führt zu einem schnellen, den Materialabfall minimierenden und die Werkstückeigenheiten bestens berücksichtigenden Nestvorgang.

Besonders vorteilhaft ist es dabei, wenn über die Digitalisiereinheit neben den werkstückbezogenen Merkmalen auch auf und/oder über dem Werkstück vorhandene Steuerungsmittel (z. B. die Hand eines Nesters oder von Hand bewegte Sensoren) und deren Steuerungsbewegungen erfaßt und die so gewonnenen Daten dem Rechner übermittelt werden, der die Bilder der Zuschnittsformen in Abhängigkeit von diesen Steuerungsdaten zur Verfügung stellt, dem Werkstück bzw. einer Werkstückabbildung überlagert, positioniert und in ihrer Relativlage zum jeweiligen Werkstück festlegt. Die Digitalisiereinheit, die eine optische Kamera oder einen anderen geeigneten Scanner aufweisen kann, dient erfindungsgemäß nicht mehr allein zum Aufnehmen der werkstückbezogenen Daten über Umrißform, Fehlerstellen u. dgl. Kennzeichen und Merkmale, sondern wird gleichzeitig auch zum Steuerungsorgan für das interaktive Nesten, indem auf die jeweilige Digitalisiereinheit abgestimmte Steuerungsmittel bzw. Steuerungsbewegungen vom Nester zur Anzeige des interaktiv zu nestenden Teilbereiches, zur Bildhaftmachung der Zuschnittsformen, zur Auswahl und Positionierung dieser Bilder oder zu anderen das interaktive Nesten erleichternden Maßnahmen genutzt werden. Dabei bleibt der Nester in Werkstückkontakt, er kann Steuerungsmittel auf dem Werkstück verschieben und verstellen, die Bewegungen selbst können als Steuerungsbewegungen erfaßt und zu Steuerungszwecken eingesetzt werden und es sind die verschiedensten, im Zusammenhang mit der elektronischen Datenverarbeitung bekannten Steuerungsmaßnahmen anwendbar, wobei vor allem die Hand des Nesters selbst als Steuerungsmittel oder Teil bzw. Tragteil von Steuerungsmitteln und Handbewegungen als Steuerungsbewegungen genützt werden können. Damit ist es beispielsweise möglich, Bilder der Zuschnittsformen auf das Werkstück zu projizieren, von diesen durch ein Hingreifen des Nesters mit der Hand ein bestimmtes Bild zu identifizieren und dieses Bild dann mittels Handbewegung zu verschieben und zu positionieren, was ein geschicktes und rasches interaktives Nesten erlaubt

Eine Möglichkeit der Digitalisierung und Bildaufbereitung besteht in der Kombination aus Kamera und Projektor, wobei zweckmäßigerweise die Bilder der Zuschnittsformen als Dunkelstellen eines Lichffeldes auf die Werkstücke projiziert werden. Damit läßt sich eine ausreichend helle Beleuchtung des Werkstückes für die Digitalisierung und die Fehlererkennung einrichten und die Projektion der Zuschnittsformen führt dennoch zu deutlich sichtbaren Bildern, die sich als Dunkelstellen gegenüber den hell erleuchtenden Umfeld gut abheben und exakt positionierbar sind. Für den Nester werden außerdem große Helligkeitsunterschiede vermieden, da das Projizieren der Dunkelstellen die Gesamthelligkeit für das Auge des Nesters nur geringfügig beeinflußt.

Selbstverständlich ist es auch möglich, die Bilder für den Nester im Oberflächenbereich der Werkstücke virtuell zu erzeugen, so daß durch ein fiktives Positionieren der Bilder das Nesten erfolgt, wozu alle bekannten Einrichtungen und Verfahren der modernen Daten- und Bildverarbeitung und der virtuellen Bildtechnologie eingesetzt werden können, um dem Nester das interaktive virtuelle Nesten zu vereinfachen.

Eine weitere Möglichkeit, dem Nester Bilder der Zuschnittsformen in Verbindung mit dem Werkstück zur Verfügung zu stellen, ergibt sich dadurch, daß, wie an sich bekannt, die Werkstücke, insbesondere ausgewählte Teilbereiche der Werkstücke, auf einem Bildschirm sichtbar gemacht werden, auf den zusätzlich auch die Bilder der Zuschnittsformen übertragen werden, was durch ein Bewegen der Zuschnittsformen-Bilder am Bildschirm das Nesten erlaubt. Dabei wird der Bildschirm im Nahbereich des Werkstückes angeordnet sein, damit der Nester den Kontakt zum Werkstück nicht verliert und Steuerungseingriffe zum Nesten über die Digitalisiereinheit erfolgen können. Selbstverständlich wäre auch ein interaktives Nesten über ein Berühren eines berührungsempfindlichen Bildschirmes neben oder über dem Werkstück durchführbar.

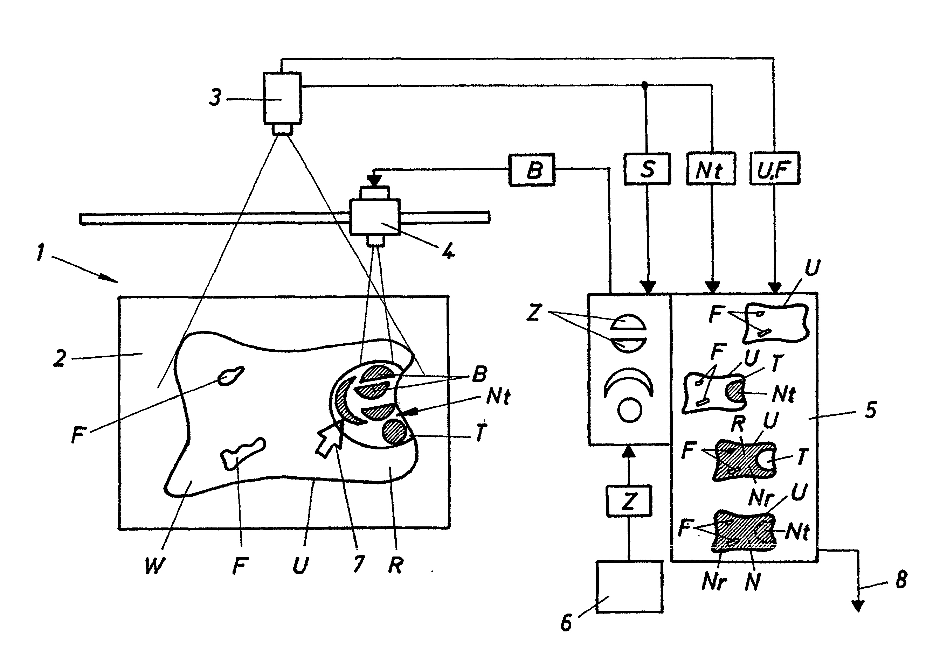

Vorteilhaft ist es dabei, wenn die auf dem Bildschirm sichtbar zu machenden Teilbereiche der Werkstücke über in den Rechner eingelesene Steuerungsdaten der Digitalisiereinheit ausgewählt werden. Da die Teilbereiche der Werkstücke, in denen Teilnester erstellt werden sollen, für die Digitalisiereinheit schlecht erkennbare Fehlerstellen ausweisen, ist das Auffinden dieser Teilbereiche allein über die Abbildung auf einem Bildschirm kaum möglich, so daß die Auswahl dieser Teilbereiche wiederum mit Hilfe der Digitalisiereinheit und geeigneten Steuerungsmitteln und -bewegungen, beispielsweise die mit geeigneten Sensoren od. dgl. ausgestattete Hand des Nesters, rasch und zuverlässig erfolgt. Ist der Teilbereich des Werkstückes am Bildschirm sichtbar, läßt sich dann sofort das interaktive Teilnesten durch gezielte Steuerungseingriffe, beispielsweise wiederum in Form von Handbewegungen des Nesters, unmittelbar im Werkstückoberflächenbereich vornehmen, wobei die Überlagerung der Zuschnittsformbilder nur mehr am Bildschirm und nicht unmittelbar auf dem Werkstück selbst erfolgt. Es ist aber auch möglich, die am Bildschirm der Werkstückabbildung überlagerten Zuschnittsformbilder auf andere Weise, etwa durch Berühren des Bildschirms oder mit anderen Steuerungshilfsmitteln durchzuführen.

Da zum interaktiven Nesten der zu nestende Teilbereich des Werkstückes in vielen Fällen im Griffbereich des Nesters liegen soll, können nach einer Weiterbildung der Erfindung die Werkstücke auf eine von einem Konveyor gebildete Auflagefläche aufgebreitet und taktweise um bestimmte Förderschritte über ein Aufnahmefeld hinwegbefördert werden, wobei die bei jedem Förderschritt im Aufnahmefeld liegenden Werkstückbereiche einzeln erfaßt und gegebenenfalls interaktiv teilgenestet werden und wobei abschließend der Rechner alle Werkstückbereiche eines Werkstückes zum Gesamtwerkstück zusammenfügt, das zugehörige Restnest errechnet und nach Kombination mit den Teilnestern das erstellte Schnittnest abspeichert. Vor allem bei größeren Werkstücken können so die Nestvorgänge schrittweise erfolgen, in welchen Förderschritten jeweils bei Bedarf auch ein Teilnesten möglich ist Der Rechner faßt dann abschließend alle Teilbereiche bzw. Werkstückbereiche entsprechend den Förderschritten zusammen und verarbeitet diese zu einem gemeinsamen Schnittnest. Die Förderschritte werden vorteilhafterweise überlappend vorgenommen, um dem Rechner die gegenseitige Zuordnung der Werkstückbereiche auf Grund der sich überlappenden Teile zu erleichtern.

In der Zeichnung ist der Erfindungsgegenstand beispielsweise an Hand eines Anlagenschemas näher veranschaulicht.

Zum Erstellen eines Schnittnestes für das Ausschneiden von Zuschnitten aus flachen, unregelmäßigen Werkstücken, insbesondere Lederhäuten, gibt es eine Aufnahmeeinrichtung 1 mit einer Auflagefläche 2 für die Werkstücke W, eine Kamera 3 als Digitalisiereinheit zur Werkstückerfassung, einen Projektor 4 zum Projizieren von Bildern der Zuschnittsformen sowie einen Rechner 5 mit einem geeigneten Rechnerteil und Speicherteil, der einerseits mit der Kamera 3 und dem Projektor 4 und anderseits mit einer Eingabeeinrichtung 6 zum Eingeben der Daten über die Zuschnitte u. dgl. und einem Steuerungsmittel 7, beispielsweise einem mit der Hand eines Nesters bewegbaren Sensor, zum interaktiven Eingreifen verbunden ist. Eine nur angedeutete Steuerleitung 8 geht vom Rechner 5 zu einer nicht weiter dargestellten Schneideinrichtung.

Die zur Verfügung stehenden Werkstücke W werden einzeln auf die Auflagefläche 2 der Aufnahmeeinrichtung 1 aufgelegt und ihre Fehlerstellen F und gegebenenfalls andere werkstückeigene Qualitätsmerkmale und ein Werkstückkennzeichen vom Nester händisch markiert, worauf die Umrißform U des Werkstückes W sowie die Fehlerstellen F und andere optisch erkennbare Mängel und zusätzliche Markierungen und Kennzeichen von der Kamera 3 erfaßt und die entsprechenden Daten dem Rechner 5 eingelesen und abgespeichert werden. Entdeckt der Nester zusätzlich einen Teilbereich T des Werkstückes W mit optisch schlecht erfaßbaren Mängeln od. dgl., wählt er diesen Teilbereich T aus und erstellt interaktiv für diesen Teilbereich ein Teilnest Nt, wozu er über gezielte Steuerungseingriffe mittels des Steuerungsmittels 7 die vom Rechner 5 über den Projektor 4 zur Verfügung gestellten Bilder B der dem Rechner vorab eingegebenen Zuschnittsformen Z innerhalb des Teilbereiches T positioniert und zum Teilnest Nt zusammenstellt. Beispielsweise werden diese Bilder B als Dunkelstellen eines Lichffeldes vom Projektor 4 auf das Werkstück W projiziert. Die Steuerungseingriffe werden dabei ebenfalls von der Kamera 3 erfaßt und als Steuerungsdaten S dem Rechner 5 eingelesen, wodurch die Digitalisiereinheit gleichzeitig auch als Steuerungsorgan für das interaktive Nesten genutzt wird.

Ist das Teilnest zusammengesetzt, wird es im Rechner 5 festgehalten, der nun für den verbleibenden Restbereich R des Werkstückes unter Berücksichtigung des Teilbereiches T und der Fehlerstellen F bzw. des Werkstückumrisses U und anderer Markierungen und erkennbarer Mängel ein Restnest Nr errechnet, Teilnest Nt und Restnest Nr kombiniert und diese Kombination aus Teil- und Restnest als Schnittnest N für das Werkstück W abspeichert. Bei einem anschließenden Schneidvorgang kann dann eine entsprechende Schneideinrichtung über die Steuerleitung 8 vom Rechner 5 nach einem Schnittprogramm angesteuert werden, das auf Grund des dem jeweiligen Werkstück zugeordneten Schnittnestes erstellt ist.

## Patentansprüche

1. Verfahren zum Erstellen eines Schnittnestes (N) für das Ausschneiden von Zuschnitten aus flachen, unregelmäßigen Werkstücken (W), insbesondere Lederhäuten, bei dem die Umrißform (U) und die Fehlerstellen (F) der auf eine Auflagefläche (2) einer Aufnahmeeinrichtung (1) aufgebreiteten Werkstücke (W) samt einem Werkstückkennzeichen und werkstückeigenen Qualitätsmerkmalen mittels einer Digitalisiereinheit (3) erfaßt und die entsprechenden Daten einem Rechner (5) eingelesen werden, der auf Grund dieser Daten und der dem Rechner (5) eingespeicherten Daten über Anzahl, Gestalt und Qualitätsanforderungen der Zuschnitte ein Schnittnest errechnet und abspeichert und dabei die erfaßten Werkstückkennzeichen der Werkstücke (W) als Werkstückkennung für die Zuordnung der Schnittnester (N) zu den jeweiligen Werkstücken (W) heranzieht, **dadurch gekennzeichnet, daß** vor dem rechnerseitigen automatischen Nesten interaktiv für ausgewählte Teilbereiche (T) der Werkstücke (W) genestet wird, indem über den Rechner (5) zur Verfügung gestellte und optisch den Werkstücken (W) bzw. einer Abbildung der Werkstücke (W) überlagerbare Bilder (B) der zu nestenden Zuschnittsformen (Z) durch gezielte Steuerungseingriffe des Nesters positioniert und innerhalb der Teilbereiche (T) zu Teilnestern (Nt) zusammengesetzt werden, worauf der Rechner (5) für die verbleibenden Restbereiche (R) der Werkstücke (W) Restnester (Nr) errechnet, die Restnester (Nr) mit den zugehörigen Teilnestern (Nt) kombiniert und die Kombinationen aus Teil- und Restnestem (Nt, Nr) jeweils als Schnittnest (N) für die einzelnen Werkstücke (W) abspeichert.

2. Verfahren nach Anspruch 1, **dadurch gekennzeichnet, daß** über die Digitalisiereinheit (3) neben den werkstückbezogenen Merkmalen auch auf und/oder über dem Werkstück (W) vorhandene Steuerungsmittel (z. B. die Hand eines Nesters oder von Hand bewegte Sensoren) und deren Steuerungsbewegungen erfaßt und die so gewonnenen Daten dem Rechner (5) übermittelt werden, der die Bilder (B) der Zuschnittsformen (Z) in Abhängigkeit von diesen Steuerungsdaten zur Verfügung stellt, dem Werkstück (W) bzw. einer Werkstückabbildung überlagert, positioniert und in ihrer Relativlage zum jeweiligen Werkstück (W) festlegt.

3. Verfahren nach Anspruch 1 oder 2, **dadurch gekennzeichnet, daß** die Bilder (B) der Zuschnittsformen (Z) als Dunkelstellen eines Lichffeldes auf die Werkstücke (W) projiziert werden.

4. Verfahren nach Anspruch 1 oder 2, **dadurch gekennzeichnet, daß** die Bilder (B) für den Nester im Oberflächenbereich der Werkstücke (W) virtuell erzeugt werden.

5. Verfahren nach Anspruch 1 oder 2, **dadurch gekennzeichnet, daß**, die Werkstücke (W), insbesondere ausgewählte Teilbereiche (T) der Werkstücke (W), auf einem Bildschirm sichtbar gemacht werden, auf den zusätzlich auch die Bilder (B) der Zuschnittsformen (Z) übertragen werden.

6. Verfahren nach Anspruch 5, **dadurch gekennzeichnet, daß** die auf dem Bildschirm sichtbar zu machenden Teilbereiche (T) der Werkstücke (W) über in den Rechner (5) eingelesene Steuerungsdaten der Digitalisiereinheit ausgewählt werden.

7. Verfahren nach einem der Ansprüche 1 bis 6, **dadurch gekennzeichnet, daß** die Werkstücke (W) auf eine von einem Konveyor gebildete Auflagefläche (2) aufgebreitet und taktweise um bestimmte Förderschritte über ein Aufnahmefeld hinwegbefördert werden, daß die bei jedem Förderschritt im Aufnahmefeld liegenden Werkstückbereiche einzeln erfaßt und gegebenenfalls interaktiv teilgenestet werden und daß abschließend der Rechner (5) alle Werkstückbereiche eines Werkstückes (W) zum Gesamtwerkstück zusammenfügt, das zugehörige Restnest errechnet und nach Kombination mit den Teilnestern das erstellte Schnittnest abspeichert.

## Claims

1. A method of making a cutting nest (N) for the cutting out of blanks from flat irregular workpieces (W), particularly leather skins, in which the contour form (U) and the defects (F) of the workpieces (W) spread out on a supporting surface (2) of a reception device (1), together with a workpiece identifier and workpiece-specific quality features, are detected by means of a digitising unit (3) and the corresponding data are read into a computer (5) which, on the basis of said data and of the data concerning the number, configuration and quality requirements of the blanks as stored in the computer (5), calculates and stores a cutting nest and at the same time uses the detected workpiece identifiers as a workpiece identification for the allocation of the cutting nests (N) to the respective workpieces (W), **characterised in that** before the automatic nesting on the computer side interactive nesting is carried out for selected partial zones (T) of the workpieces (W) **in that** images (B) of the blank forms (2) for nesting which are made available via the computer (5) and are adapted to be optically superimposed on the workpieces (W) or an image of the workpieces (W) are positioned by purposive control operations of the nester and are combined within the partial zones (T) to form partial nests (Nt), whereupon the computer (5) calculates for the remaining residual zones (R) of the workpieces (W) residual nests (Nr), combines the residual nests (Nr) with the associated partial nests (Nt) and stores the combinations of partial nests and residual nests (Nt, Nr) in each case as a cutting nest (N) for the individual workpieces (W).

2. A method according to claim 1, **characterised in that** the digitising unit (3) detects not only the workpiece-related features but also control means present on and/or above the workpiece (W) (for example the hand of a nester or manually moved sensors) and the control movements thereof and the data thus acquired are fed to the computer (5) which makes available the images (B) of the blank forms (Z) in dependence on said control data, superimposes the same on the workpiece (W) or a workpiece image, positions them, and fixes them in their relative position to the respective workpiece (W).

3. A method according to claim 1 or 2, **characterised in that** the images (B) of the blank forms (2) are projected as dark sites of a light field on to the workpieces (W).

4. A method according to claim 1 or 2, **characterised in that** the images (B) for the nester are produced virtually in the surface zone of the workpieces (W).

5. A method according to claim 1 or 2, **characterised in that** the workpieces (W), particularly selected partial zones (T) of the workpieces (W), are visualised on a screen on to which the images (B) of the blank forms (Z) are also transmitted.

6. A method according to claim 5, **characterised in that** the partial zones (T) of the workpieces (W) to be visualised on the screen are selected by means of control data of the digitising unit read into the computer (5).

7. A method according to any one of claims 1 to 6, **characterised in that** the workpieces (W) are spread out on a support surface (2) formed on a conveyor and are cyclically conveyed away by specific conveying steps over a reception field, **in that** the workpiece zones lying in the reception field on each step are individually detected and if necessary interactively partially nested and **in that** finally the computer (5) combines all the workpiece zones of a workpiece (W) to form the total workpiece, calculates the associated residual nest and after combination with the partial nests stores the resulting cutting nest.

## Revendications

1. Procédé pour la fabrication d'un patron à découper (N) pour le découpage de pièces découpées formés de pièces (W) irrégulières, plates, en particulier de peaux de cuir, dans lequel la forme de contour (U) et les points défectueux (F) des pièces (W), préparées sur une face de pose (2) d'une dispositif support (1), avec une identification de pièce et des caractéristiques de qualité propres à la pièce, sont détectées à l'aide d'une unité de numérisation (3) et les données correspondantes sont enregistrées dans un ordinateur (5) qui, sur la base de ces données et des données mémorisées dans l'ordinateur (5), calcule et mémorise un patron de découpage, par l'intermédiaire du nombre, de la forme et des exigences de qualité des pièces découpées, et les identifications des pièces (W) ayant été détectées étant alors utilisées comme identification de pièces pour l'association des patrons de coupe (N) aux pièces (W) respectives, **caractérisé par le fait que**, avant de procéder au placement imbriqué automatique, côté ordinateur, on procède au placement imbriqué interactif pour des zones partielles (T) sélectionnées des pièces (W), **par le fait que**, par l'intermédiaire de l'ordinateur (5), des images (B), mises à disposition et superposable aux pièces (W) ou bien à une illustration des pièces (W), des formes de pièces découpées (Z) à imbriquer, sont positionnées par des interventions à dessein de la commande du fabricant de patrons et, dans les zones partielles (T), sont assemblées pour former des patrons partiels (Nt), suite à quoi, l'ordinateur (5) calcule, pour les zones restantes (R) subsistantes des pièces (W), des patrons restant résiduels (Nr), les patrons résiduels (Nr) sont combinés aux patrons partiels (Nt) afférents et les combinaisons de patrons partiels et résiduels (Nt, Nr) sont chaque fois mémorisés en tant que patrons de coupe (N) pour les différentes pièces (W).

2. Procédé selon la revendication 1, **caractérisé par le fait que**, par l'intermédiaire de l'unité de numérisation (3), outre les caractéristiques se référant à la pièce, on détecte des moyens de commande également prévus au contact et/ou au-dessus de la pièce (W) (par exemple la main d'un fabricant de patrons ou bien des capteurs déplacés à la main) et leur déplacement de commande, et les données ainsi obtenues sont transmises à l'ordinateur (5), qui met à disposition les images (B) des formes de pièces découpées (Z) en fonction de ces données de commande, les superpose à la pièce (W) ou à une illustration de la pièce, les positionne et les fixe à leur position relative par rapport à la pièce (W) respective.

3. Procédé selon la revendication 1 ou 2, **caractérisé par le fait que** les images (B) des formes de pièces découpées (Z) sont projetées sous forme de points sombres d'un champ lumineux sur les pièces (W).

4. Procédé selon la revendication 1 ou 2, **caractérisé par le fait que** les images (B) pour le fabricant de patrons sont produites virtuellement dans la zone de surface des pièces (W).

5. Procédé selon la revendication 1 ou 2, **caractérisé par le fait que** les pièces (W), en particulier des zones partielles (T) sélectionnées des pièces (W), sont rendues visibles sur un écran, sur lequel en plus également les images (B) des formes de pièces découpées (Z) sont transmises.

6. Procédé selon la revendication 5, **caractérisé par le fait que** les zones partielles (T), à rendre visibles sur l'écran, des pièces (W) sont sélectionnées par l'intermédiaire de données de commande, enregistrées dans l'ordinateur (5), de l'unité de numérisation.

7. Procédé selon l'une des revendications 1 à 6, **caractérisé par le fait que** les pièces (W) sont étalées sur une face de pose (2) formée par un convoyeur et déplacées dans un sens et dans l'autre de façon cadencée, de la valeur de pas de transport déterminés sur un champ d'enregistrement, **par le fait que** les zones de pièces placées dans le champ d'enregistrement à chaque étape de transport sont détectées individuellement et, le cas échéant, sont mises partiellement en imbrication de façon interactive et **par le fait qu'**ensuite l'ordinateur (5) assemble toutes les zones de pièces d'une pièce (W) pour former une pièce globale, calcule le patron résiduel afférent et, après avoir effectuer une combinaison avec les patrons partiels, mémorise le patron à découper établi.
